# EUROPÄISCHE PATENTANMELDUNG

(11) **EP 2 886 514 A1**
(43) Veröffentlichungstag der Anmeldung: **24.06.2015**
(21) Anmeldenummer: 13199113.5
(22) Anmeldetag: 20.12.2013
(51) Int. Cl.: C01B 3/38, C01B 3/40, B01J 23/46

(54) **Verfahren zur Reformierung von Gemischen aus Kohlenwasserstoffen und Kohlendioxid**

(71) Anmelder: BASF SE, 67056 Ludwigshafen (DE)
(72) Erfinder: Milanov, Andrian, Dr., 68199 Mannheim (DE); Schwab, Ekkehard, Dr., 67434 Neustadt (DE); Urtel, Heiko, Dr., 67240 Bobenheim-Roxheim (DE); Schunk, Stephan, A., 69126 Heidelberg-Rohrbach (DE); Wasserschaff, Guido, 69151 Neckargemünd (DE)
(74) Vertreter: Kallus, Stefan

(57) **Zusammenfassung**

Die vorliegende Erfindung betrifft ein Verfahren zur Reformierung von Gemischen aus Kohlenwasserstoffen, vorzugsweise Methan, und Kohlendioxid, wobei das Verfahren zwei Verfahrens-stufen umfasst. In einer ersten Verfahrensstufe wird ein Eduktgas mit einem edelmetallhaltigen Katalysator in Kontakt gebracht und zu einem ersten Produktgas (nachfolgend auch Produktgas 1 genannt) umgesetzt. In zumindest einer weiteren Verfahrensstufe wird das in der ersten Verfahrensstufe erhaltene erste Produktgas mit einem nicht edelmetallhaltigen Katalysator in Kontakt gebracht und zu einem zweiten Produktgas (nachfolgend auch Produktgas 2 genannt) umgesetzt. Dem in der ersten Verfahrensstufe erhaltenen Produktgas 1 können weitere Gase beigemischt werden, bevor es dann in der zumindest zweiten Verfahrensstufe weiter umgesetzt wird. Kennzeichnend für das erfindungsgemäße Verfahren ist, dass es mit einem Eduktgas durchgeführt wird, dessen Wasserdampfgehalt sehr niedrig ist beziehungsweise, das (fast) vollständig wasserfrei ist, wobei der Wasserdampfgehalt im Eduktgas < 50 Vol.-% ist, vorzugsweise < 25 Vol.-%, noch weiter vorzugsweise < 15 Vol.-%, insbesondere kleiner 10 Vol.-%, abermals bevorzugt < 5 Vol.-%, darüber hinaus bevorzugt < 3 Vol.-% und insbesondere bevorzugt < 1 Vol.-%; ganz besonders bevorzugt ist eine Ausführungsform, in der das Eduktgas vollständig wasserfrei ist (d.h. der Wasserdampfgehalt < 0,005 Vol.-% beziehungsweise ohne Zusätze an Wasser). In Verbindung mit dem erfindungsgemäßen Verfahren kann die Bildung von Koks auf dem Katalysator in effizienter Weise verhindert werden. Durch die Kombination von einer ersten Verfahrensstufe mit einem edelmetallhaltigen Katalysator und zumindest einer weiteren Verfahrensstufe mit nicht edelmetallhaltigen Katalysator können mittels des erfindungsgemäßen Verfahrens beträchtliche Mengen an kostspieligen Edelmetallen eingespart werden.

## Beschreibung

Die vorliegende Erfindung betrifft ein Verfahren zur Reformierung von Gemischen aus Kohlenwasserstoffen, vorzugsweise Methan, und Kohlendioxid. In einer ersten Verfahrensstufe wird ein Eduktgas mit einem edelmetallhaltigen Katalysator in Kontakt gebracht und zu einem ersten Produktgas (nachfolgend auch Produktgas 1 genannt) umgesetzt. In zumindest einer weiteren Verfahrensstufe wird das in der ersten Verfahrensstufe erhaltene erste Produktgas mit einem nicht edelmetallhaltigen Katalysator in Kontakt gebracht und zu einem zweiten Produktgas (nachfolgend auch Produktgas 2 genannt) umgesetzt. Dem in der ersten Verfahrensstufe erhaltenen Produktgas 1 können weitere Gase beigemischt werden, bevor es dann in der zumindest zweiten Verfahrensstufe weiter umgesetzt wird.

Bei dem Gas, das dem ersten Produktgas beigemischt wird, kann es sich beispielsweise um Gas handeln, das aus der Eduktgasvorrat stammt, und/oder Gas, das aus einem Kreisgasstrom beziehungsweise dem Recycle-Strom (des Prozesses selber) stammt. Die Umsetzung des ersten Produktgases (d.h. dem Produktgas 1) in der zweiten Verfahrensstufe führt zur Bildung des zweiten Produktgases (d.h. dem Produktgas 2). Das zweite Produktgas kann anschließend in einer oder auch in mehreren weiteren Verfahrensstufen weiter umgesetzt werden. Das für die erste Verfahrensstufe eingesetzte Eduktgas enthält ein Gemisch aus Kohlenwasserstoffen, vorzugsweise Methan und Kohlendioxid, und ist dadurch gekennzeichnet, dass es einen geringen Wassergehalt aufweist beziehungsweise Wasserfrei ist. Das Eduktgas ist durch ein bevorzugtes Verhältnis von Wasserdampfmolekülen zu Kohlenstoffatomen im eingesetzten Kohlenwasserstoff (d.h. n_{H2O}/n_{c.a.n.}-Verhältnis) gekennzeichnet, wobei das n_{H2O}/n_{c.a.n}.--Verhältnis < 1 ist, vorzugsweise < 0,5, weiter vorzugsweise < 0,2, besonders vorzugsweise < 0,1, darüber hinaus bevorzugt < 0,05, und insbesondere bevorzugt < 0,02. (Die Zahl der Kohlenstoffatome ist 1 für Methan, zwei für Ethan und drei für Propan u.s.w.)

Weiterhin bevorzugt ist es, dass der Gesamtgehalt an Wasserdampf im Eduktgas < 50 Vol.-% ist, vorzugsweise < 25 Vol.-%, weiter vorzugsweise < 15 Vol.-%, noch weiter vorzugsweise < 10 Vol.-%, abermals weiter bevorzugt < 5 Vol.-%, darüber hinaus bevorzugt < 3 Vol.-% und insbesondere bevorzugt < 1 Vol.-%. In einer noch weiter bevorzugten Ausführungsform ist das Eduktgas wasserfrei (was in der technischen Anwendung einem Wasserdampfgehalt von < 0,005-Vol.-% entspricht). In Bezug auf wasserfrei ist zu erwähnen, dass geringfügige Mengen an Wasserdampf nicht völlig ausgeschlossen sind. Dem Eduktgas werden jedoch keine Zusätze an Wasserdampf beigemischt.

Das Eduktgas kann außerdem bis zu 30 Vol.-% Wasserstoff enthalten, wobei sich die Angabe auf das Gesamtvolumen an Eduktgas bezieht. In einer bevorzugten Ausführungsform des Verfahrens ist der Wasserstoffgehalt im Eduktgas < 20 Vol.-%, bevorzugt < 10 Vol.-%, weiter bevorzugt < 5 Vol.-%, noch weiter bevorzugt < 3 Vol.-% und insbesondere bevorzugt < 1 Vol.-%. In einer weiteren bevorzugten Ausführugsform ist das Eduktgas wasserstofffrei.

Das erfindungsgemäße Verfahren ist dadurch gekennzeichnet, dass die im Eduktgas enthaltenen Kohlenwasserstoffe in der ersten Verfahrensstufe nicht vollständig umgesetzt werden. Der Kohlenwasserstoffumsatz in der ersten Verfahrensstufe ist vorzugsweise im Bereich von 1 - 80 %, weiter bevorzugt im Bereich von 2 - 60%, noch weiter bevorzugt im Bereich von 3 - 50%, besonders bevorzugt im Bereich von 4 - 45% und insbesondere bevorzugt im Bereich von 5-40 %. In einer weiteren besonders bevorzugten Ausführungsform des Verfahrens liegt der Kohlenwasserstoffumsatz in der ersten Verfahrensstufe im Bereich 10 - 35 %.

Die Reformierung von Methan und Kohlendioxid ist von großem wirtschaftlichem Interesse, da mittels dieses Verfahrens Synthesegas hergestellt werden kann. Das Synthesegas bildet einen Rohstoff für die Herstellung von chemischen Grundstoffen. Darüber hinaus ist die Verwertung von Kohlendioxid als Ausgangsstoff bei chemischen Synthesen von signifikanter Bedeutung, um Kohlendioxid, das in zahlreichen Prozessen als Abfallprodukt anfällt, auf chemischem Weg zu binden und dadurch eine Emission in die Atmosphäre zu vermeiden.

Gemäß ihrer großen wirtschaftlichen Bedeutung bildet die Reformierung von Kohlenwasserstoffen in Gegenwart von Kohlendioxid den Gegenstand von zahlreichen Veröffentlichungen. Im Folgenden wird eine kurze Übersicht zu den inhaltlichen Schwerpunkten dieser Veröffentlichungen gegeben.

Die US 8,043,530 B2 von der Firma Umicore (als Erfinder genannt werden L. Chen u. J.G. Weissman) bezieht sich auf einen Brennstoffreformierungskatalysator und beansprucht ein Verfahren zur Herstellung eines wasserstoffhaltigen Reformats, bei dem ein kohlenwasserstoffhaltiger Brennstoff mit einem zweistufigen Katalysator kontaktiert wird, der sich in einem Reaktionsgefäß befindet. Gemäß der Offenbarung umfasst die erste Stufe Pt oder Ir als edelmetallhaltige Komponente. Die zweite Katalysatorstufe umfasst entweder Ni gemeinsam mit Ir oder Ni gemeinsam mit Pd. Daneben kann auch noch Rh in der zweiten Katalysatorstufe vorliegen, wobei der Rh-Gehalt nicht größer als 0,5 Gew.-% ist. Das Verfahren bezieht sich auf die Durchführung von partiellen Oxidationsreaktionen, Dampfreformierungsreaktionen oder autothermalen (autothermischen) Reformierungsreaktionen.

Reihenförmige beziehungsweise abgestufte Anordnungen mit Reformierräumen sind im Stand der Technik bekannt, um beispielsweise Gasgemische, die Brennstoffe, Wasser und Luft enthalten, in wasserstoffreiche Brennstoffen umzuwandeln, die für den Betrieb von Brennstoffzellen benötigt werden.

Die EP 1245 532 (Anmelderin ist Ishikawajima-Harima Heavy Industries) offenbart ein Verfahren und eine Vorrichtung zur Umwandlung von Gasgemischen, die Brennstoff, Dampf und Luft enthalten, in einen Brennstoff, der Wasserstoff enthält, wobei die Anwendung hauptsächlich auf den Automobilsektor ausgerichtet ist. Die erste katalytische Stufe beinhaltet eine exotherm ablaufende Reaktion in Verbindung mit einem Katalysator 8a und eine anschließende Reformierung des dabei erhaltenen Gasgemisches mit einem Reformierungskatalysator 8b, der sich in unmittelbarer Nähe zum Oxidationskatalysator 8a befindet. Durch die spezielle technische Anordnung der Katalysatoren 8a und 8b kommt es hierbei zu Wärmeaustauscheffekten zwischen exotherm und endotherm ablaufender Reaktionsstufe.

In der EP 2 022 756 A2 (die Anmelderin ist Delphi Technologies) wird ein abgestufter Kohlenwasserstoffreformer offenbart und beansprucht, bei dem ein katalytischer Reformer zur Reformierung von Kohlenwasserstoffbrennstoffen und Sauerstoff in Reformate eingesetzt wird, die Wasserstoff und Kohlenmonoxid enthalten. Die Mehrzahl von Reformierungsstufen umfasst exotherme und endotherme Stufen, wobei diese in einer Flusssequenz angeordnet sind und jeweils Substrate umfassen, auf denen die katalytischen Materialien aufgebracht sind. Die einzelnen Verfahrensstufen haben katalytische Eigenschaften, die sich von der jeweils anderen Stufe unterscheidet. Hierbei ist es auch bevorzug, dass die katalytischen Eigenschaften der ersten Stufe geringer sind als die Eigenschaften der letzten Stufe.

In der RU 2 274 600 C1 wird ein mehrstufiges Reformierungsverfahren offenbart, bei dem die Ströme mit niedrigeren Alkanen mit etwa 1 bis 34 Kohlenstoffatomen durch einen Wärmetauscher geleitet werden. Die Leitungen des Wärmetauschers sind in einem adiabatisch betriebenen Reaktor mit Katalysatorpackung angeordnet. Vor der ersten Reaktionsstufe und zwischen den einzelnen Reaktionsstufen wird der Gasstrom mit Wasserdampf und/oder Kohlendioxid gemischt und am Ende jeder Stufe gekühlt. Am Ende der letzten Stufe wird der Strom behandelt, um den Wasserdampf zu entfernen.

Die Verwertung von Kohlendioxid als ein Ausgangsstoff bei der Durchführung von Reformierungsreaktionen mit Kohlenwasserstoffen zur Herstellung von Synthesegas sowie dessen Umwandlung in Basischemikalien ist von großer wirtschaftlicher und technischer Bedeutung. Kohlendioxid wurde schon einigen Jahrzenten als Treibhausgas identifiziert und diese Effekte wurden immer wieder bestätigt. Die Verminderung der Kohlendioxidemission in die Atmosphäre stellt eine große technische Herausforderung für die Forschung dar, um klimafreundlichere Prozesse zu etablieren.

Eine weitere technische Herausforderung ist die effiziente Umwandlung von primären Energiequellen wie Erdgas zu höherwertigen Chemikalien und Treibstoffen mit höherer Energiedichte, die leichter zu transportieren sind als Gase.

Die katalytische Umsetzung von Kohlenwasserstoffen mit Dampf, bekannt als Dampfreformierung bzw. Steam Reforming, ist ein großtechnisch etablierter Prozess für die Herstellung von Synthesegas (eine Mischung aus H₂ und CO). Das erhaltene Synthesegas kann anschließend zu (höherwertigen) Chemikalien oder zu (höherwertigen) Treibstoffen umgewandelt werden. Als beispielhaft hierfür ist die Herstellung von Methanol, Dimethylether, Essigsäure, Fischer-Tropsch-Treibstoffen, Olefine u.s.w. zu nennen. Beim Dampfreformierungsprozess wird üblicherweise ein hoher Dampfüberschuss eingesetzt, um die Verkokung des üblicherweise Nickelhaltigen Katalysators zu unterdrücken. Eine Übersicht zur Wasserstoff und Synthesegas Herstellung via Dampfreformierung wird unter anderem in einer Veröffentlichung von York et al. (A.P.E. York, T. Xiao, M.L.H. Green, Catal.Rev., 49, (2007) p.511-560). Dampfreformierungs-Reaktion: CH₄ + H₂O ⇔ CO + 3H₂

Die Reformierung von Kohlenwasserstoffe mit CO₂ anstelle von H₂O, bekannt als Trockenreformierung oder Dry Reforming, ist eine attraktive Alternative zur Dampfreformierung, da sie ein Weg zur chemischen Verwertung von CO₂ darstellt und gleichzeitig ein Synthesegas mit einem niedrigem H₂/CO-Verhältnis liefert, welches besonders geeignet ist für die Synthese von Methanol, DME, Essigsäure, höheren Alkoholen sowie auch für die Fischer-Tropsch Synthese von langkettigen Kohlenwasserstoffen und Olefinen. Bei der Verwendung von Methan als Ausgangsstoff stellt die Trockenreformierung einen attraktiven Weg für die chemische Umwandlung von gleich zwei Treibausgasen dar, nämlich CH₄ und CO₂. Die Abwesenheit von Wasserdampf stellt allerdings eine große Herausforderung dar, die aufgrund der wasserfreien Prozessbedingungen zu einer raschen Verkokung und zum Ausfall des Katalysators führt, wodurch ein industrieller Einsatz des Verfahrens unrentabel wird.

Eine Übersicht zur Kohledioxid-Reformierung von Methan wird in einer Veröffentlichung von Bradford et al. gegeben (M.C.J. Bradford, M.A. Vannice; Catal. Rev. - Sci. Eng., 41 (1) (1999) p. 1 - 42).
Trockenreformierung Reaktion: CH₄ + CO₂ ⇔ 2CO + 2 H₂

Eine der erfindungsgemäßen Aufgaben war es, ein katalytisches Verfahren zur Synthesegasherstellung bereitzustellen, das eine verbesserte Wirtschaftlichkeit, eine hohe Energieeffizienz und eine deutlich geringere Tendenz zur Koksbildung auf dem Katalysator gegenüber den im Stand der Technik bekannten Verfahren aufweist. Eine weitere Aufgabe war es auch, ein katalytisches Verfahren bereitzustellen, mit dessen Hilfe Kohlendioxid chemisch umgewandelt werden kann. Durch die verbessere Nutzung von Kohlendioxid soll ein Weg gefunden werden, welcher dazu beitragen kann die Emission von Kohlendioxid in die Atmosphäre zu verringern. Gleichzeitig besteht auch ein Interesse an der Entwicklung eines Reformierungsverfahrens, das technisch besser zu handhaben ist als derzeitig betriebene Reformierungsverfahren.

Zur Lösung der hier genannten Aufgaben wird ein Verfahren zur Reformierung Eduktgas bereitgestellt, das Kohlenwasserstoffe und CO₂ umfasst, wobei als Kohlenwasserstoff vorzugsweise Methan im Eduktgas enthalten ist und wobei das erfindungsgemäße Verfahren zumindest zwei Stufen umfasst, die zumindest durch nachfolgende Verfahrensstufen gekennzeichnet sind:
(i) Inkontaktbringen von einem Eduktgas mit edelmetallhaltigem Katalysator (Cat.1) unter Bildung von Produktgas 1, wobei das Eduktgas zumindest Kohlenwasserstoffe, vorzugsweise Methan, und CO₂ sowie optional Wasserdampf umfasst, wobei das Verhältnis von Wasserdampf zu Kohlenstoffatomen (d.h. das n_{H2O}/n_{c.a.n.}-Verhältnis) < 1 ist, vorzugsweise < 0,5, weiter vorzugsweise < 0,2, besonders vorzugsweise < 0,1, weiter besonders vorzugsweise < 0,05, und insbesondere bevorzugt < 0,02., wobei Wasserdampfgehalt im Eduktgas < 50 Vol.-% ist, vorzugsweise < 25 Vol.-%, weiter vorzugsweise < 15 Vol.-%, weiter vorzugsweise < 10 Vol.-%, besonders bevorzugt < 5 Vol.-%, weiter besonders bevorzugt < 3 Vol.-%, und insbesondere bevorzugt < 1 Vol.-%,
   und das Eduktgas außerdem - optional - bis zu 30 Vol.-% Wasserstoff bezogen auf dem gesamten Eduktgasvolumen, bevorzugt < 20 Vol.-%, weiter bevorzugt < 10 Vol.-%, noch weiter bevorzugt < 5 Vol.-%, besonders bevorzugt < 3 Vol.-%, und insbesondere bevorzugt < 1 Vol.-% enthält.
(ii) Inkontaktbringen von Produktgas 1 aus der ersten Verfahrensstufe mit einem oder mehreren nicht edelmetallhaltigen Katalysatoren (d.h. dem Cat.2, Cat.3, etc.) in zumindest einer weiteren Verfahrensstufen unter Bildung von Produktgas 2, wobei das Produktgas 1 direkt oder nach Beimischen von Gas eingesetzt wird, beim beigemischten Gas handelt es sich vorzugsweise um Eduktgas und/oder Kreislaufgas (Recyclegas).

Das erfindungsgemäße Verfahren ist dadurch gekennzeichnet, dass Eduktgase umgesetzt werden, die einen hohen Anteil an Kohlendioxid und Kohlenwasserstoffe enthalten, vorzugsweise handelt es sich bei den Kohlenwasserstoffen um Methan. Gleichzeitig enthalten die Eduktgase nur geringe Mengen an Wasser beziehungsweise sind vollständige wasserfrei. Das erfindungsgemäße Verfahren kann jedoch mit allen Kohlenwasserstoffen durchgeführt werden, die unter den jeweiligen Verfahrensbedingungen in der Gasphase vorliegen. Hervorzuheben ist, dass in Verbindung mit dem erfindungsgemäßen Verfahren wird die Verkokung des Katalysatormaterials verhindert, obwohl das Eduktgas nahezu wasserfreie beziehungsweise vollständig wasserfrei ist. Durch die erfindungsgemäße Kombination eines geeigneten edelmetallhaltigen Katalysator in der ersten Varfahrensstufe, wo nur ein Teilumsatz der eingesetzten Kohlenwasserstoffe erzielt wird, mit einem oder mehreren geeigneten nicht edelmetallhaltigen Katalysatoren in den zweiten bzw. weiteren Verfahrensstufen, wo die eingesetzten Kohlenwasserstoffe vollständig (bzw. bis zum oder nahe zum thermodynamischen Gleichgewicht) umgesetzt werden, ist der erfindungsgemäße Verfahren ökonomischer im Vergleich zu herkömmlichen Verfahren für die Umsetzung von Kohlenwasserstoffen und CO₂ zu Synthesegas, welche ausschließlich edelmetallhaltigen Katalysatoren einsetzen. Die Umsetzung von hohen Anteilen an Kohlendioxid ist von Bedeutung, da hierdurch eine effiziente Verwertung an Kohlendioxid ermöglicht wird. Der Anzahl der im Eduktgas eingesetzten Kohlendioxidmoleküle kann in etwas so hoch sein wie die Anzahl der Kohlenwasserstoffatome, die im Eduktgas vorhanden sind. Es ist auch denkbar, dass die Anzahl der Kohlendioxidmolekülen höher als die Kohlenwasserstoffatome ist, wodurch die H₂ zu CO Verhältnis des erhaltenen Synthesegas beeinflusst bzw. eingestellt werden kann.

Die im Eduktgas enthaltenen Kohlenwasserstoffe können ausgewählt sein aus der Gruppe Methan, Ethan, Ethen, Propan, Butan, Pentan und höhere Alkane.

Die im jeweils eingesetzten Kohlenwasserstoff vorliegende Kohlenstoffatomzahl beziehungsweise Kohlenstoffzahl (die Zahl wird in der vorliegenden Offenbarung mit carbon atoms number beziehungsweise c.a.n. abgekürzt) ist eine charakteristische Größe, die für die Zusammensetzung des Eduktgases beziehungsweise für die Zugabe an CO₂ von Bedeutung ist.

Methan weist die Kohlenstoffzahl eins auf, wohingegen Ethan die Kohlenstoffzahl zwei und Propan die Kohlenstoffzahl drei aufweisen. In Bezug auf Methan folgt die Molzahl an Kohlenstoffatomen pro Mol Methan von 1 (d.h. n_{c.a.n.} = 1), bei Ethan ist die Molzahl an Kohlenstoffatomen pro Mol Ethan zwei (d.h. n_{c.a.n.} = 2). Bei der Molzahl an Kohlenstoffatomen ist auch die Konzentration der Kohlenwasserstoffe im Eduktgas zu berücksichtigen. Falls eine Mischung aus Methan und Ethan vorliegt und diese Moleküle mit gleicher Konzentration vorliegen, so resultiert daraus eine Anzahl an Kohlenstoffatomen von n_{c.a.n.} = 1,5. Zu beachten ist, dass sich der angeführte Parameter auf die Kohlenstoffatome der Kohlenwasserstoffe bezieht, nicht jedoch auf die Kohlenstoffe des Kohlendioxids, das auch im Eduktgas vorhanden ist.

Die Stoffmenge an Kohlenstoffatomen der im Eduktgas enthaltenen Kohlenwasserstoffe sind wesentlich im Hinblick auf das erfindungsgemäße Verfahren, da diese in einer speziellen Beziehung mit der Stoffmenge an Wasser steht, die für das erfindungsgemäße Verfahren eingesetzt wird. Ein wesentlicher Aspekt des erfindungsgemäßen Reformierungsverfahrens ist, dass dieses mit einem sehr geringen Wasserdampfgehalten im Eduktgas beziehungsweise auch mit einem wasserfreien Eduktgas durchgeführt werden kann.

Das erfindungsgemäße Verfahren kann somit unter sehr wasserdampfarmen Bedingungen betrieben werden. In einer bevorzugten Ausführungsform des erfindungsgemäßen Verfahrens weist das zur ersten Verfahrensstufe eingesetzte Eduktgas ein Verhältnis von Wasserdampf zu Kohlenstoffatomen (d.h. n_{H2O}/n_{c.a.n.}-Verhältnis) von < 1 ist, vorzugsweise < 0,5, weiter vorzugsweise < 0,2, besonders vorzugsweise < 0,1, weiter besonders vorzugsweise < 0,05, und insbesondere bevorzugt < 0,02.

In einer bevorzugten Ausführungsform wird das Verfahren mit einem "wasserfreien" Eduktgas betrieben, was in der technischem Anwendung einem Wassergehalt von < 0,005-Vol.-% entspricht. Geringfügige Mengen an Wasser können beispielsweise in der Kohlenwasserstoffquelle enthalten sein, diesem werden jedoch keine Zusätze an Wasserdampf beigemengt.

Diesbezüglich ist zu erwähnen, dass ein wasserdampfarmes Eduktgas aus verfahrenstechnischer Sicht sehr schwierig in der Handhabung ist, da es hierdurch zu einer erhöhten Koksbildungstendenz und Koksabscheidung auf dem Katalysator kommt, was das Verfahren daher stört und eine Langzeitstabilität des Verfahrens in der Regel verhindert. Erst mittels sehr kostspieligen edelmetallhaltigen Katalysatoren ist es möglich, die Koksabscheidung auf dem Katalysator während des Verfahrens zu unterbinden, um dadurch ein Reformierungsverfahren in Gegenwart von geringen Wasserdampfmengen überhaupt erst technisch handhaben zu können und umsetzbar zu machen. Die technischen Anforderungen, die an das Katalysatorsystem gestellt werden, sind enorm hoch, wenn diese in einem Verfahren betrieben werden, das nur geringe Mengen an Wasserdampf im Eduktgas aufweist.

Mehrere unterschiedliche Katalysatorsysteme und Verfahren werden im Stand der Technik publiziert, die auf edelmetallhaltigen Katalysatoren basieren und die einen Betrieb im wasserdampfarmen Betriebszustand zulassen. Ein großtechnischer Einsatz dieser auf edelmetallhaltigen Katalysatoren konnte bislang jedoch nicht realisiert werden, da die Verwendung von hochpreisigen Edelmetallen zu kostspielig ist und diese nicht mit denjenigen Verfahren konkurrieren kann, die auf nicht edelmetallhaltigen Katalysatoren beruhen.

Ein wesentliches Element der vorliegenden Erfindung ist es, zumindest zwei unterschiedliche Verfahrensschritte zu einem integralen Verfahren zu kombinieren. In einer ersten Verfahrensstufe wird ein Eduktfluid mit einem edelmetallhaltigen Katalysator zu einem ersten Produktgas umgesetzt und das erste Produktgas wird anschließend in einer zweiten Verfahrensstufe mit einem nicht edelmetallhaltigen Katalysator in Kontakt gebracht und zu einem zweiten Produktgas umgesetzt. Dem zweiten Verfahrensschritt kann ein dritter Verfahrensschritt folgen.

Durch die erfindungsgemäße Verfahren und die darin enthaltene Kombination von zumindest zwei Verfahrensstufe mit einer ersten Verfahrensstufe mit edelmetallhaltigem Katalysator (Cat.1) und zumindest einer weiteren Verfahrensstufe mit nicht edelmetallhaltigem Katalysatoren (Cat.2, Cat.3 etc.) ergibt sich hinsichtlich Kohlenwasserstoffreformierung ein Synergieeffekt, der einen technischen Vorteil bringt.

Darüber hinaus können den jeweiligen Produktgasen auch Gase beigemischt werden, bevor diese in der nächsten Verfahrensstufe weiter umgesetzt werden.

Das erfindungsgemäße Verfahren bietet den Vorteil, dass insgesamt nur geringe Mengen an edelmetallhaltigem Katalysator (Cat.1) eingesetzt werden müssen, und zwar lediglich für die erste Verfahrensstufe. Diese Verfahrensstufe ermöglicht die Erzeugung eines ersten Produktgas, dessen einen Wasserdampfgehalt beziehungsweise dessen Gehalt an Wasserstoff und Wasserdampf (d.h. H₂+H₂O - Gehalt) ausreichend hoch ist, um in nachfolgenden Verfahrensstufen in Verbindung mit nicht edelmetallhaltigen Katalysatoren ohne Verkokung umgesetzt zu werden.

Das erfindungsgemäße Verfahren ist dadurch gekennzeichnet, dass in der ersten Verfahrensstufe mit dem edelmetallhaltigen Katalysator (Cat.1) die im Eduktgas enthaltene Kohlenwasserstoffe nicht vollständig umgesetzt wird. Der erzielte Kohlenwasserstoffumsatz in der Verfahrensstufe 1 ist vorzugsweise 1 - 80 %, weiter bevorzugt 2 - 60%, noch weiter bevorzugt 3 - 50%, besonders bevorzugt 4 - 45%, insbesondere bevorzugt 5 - 40 %. In einer weiteren besonders bevorzugten Ausführungsform des Verfahrens liegt der Kohlenwasserstoffumsatz im Bereich 10 - 35 %.

Das bei der Umsetzung des Eduktgases am edelmetallhaltigen Katalysator in der Verfahrensstufe erhaltene Produktgas (d.h. dem Produktgas 1) ist dadurch gekennzeichnet, dass dieses als wesentliche Bestandsteile Methan bzw. nicht umgesetztes Kohlenwasserstoff, Wasserstoff, Kohlenmonoxid, Kohlendioxid und Wasserdampf enthält.

Das Produktgas 1 aus der ersten Verfahrensstufe kann direkt und/oder nach Beimischen von Gas in zumindest einer weiteren Verfahrensstufe umgesetzt werden. Als Gas können beispielsweise Eduktgas und/oder Kreisgas (Recycle-Gas) beigemischt werden. Bei der zumindest zweiten oder weiteren Verfahrensstufen kann das Produktgas mit mehreren nicht edelmetallhaltigen Katalysatoren (Cat. 2, Cat. 3, etc.) in Kontakt gebracht werden und zum zweiten Produktgas umgesetzt werden. Dieses wiederum kann in einer dritten Verfahrensstufe in Kontakt mit einem nicht edelmetallhaltigen Katalysator zu einem dritten Produktgas (d.h. dem Produktgas 3) umgesetzt werden.

In einer bevorzugten Ausführungsform des erfindungsgemäßen Verfahren ist das Produktgas 1 beziehungsweise die Mischung aus Produktgas 1 und weiterem Gas vor dem Inkontaktbringen mit zumindest einem nicht edelmetallhaltigen Katalysator (Cat.2, Cat.3 etc.) dadurch gekennzeichnet, dass dieses einen Wasserdampfgehalt beziehungsweise einen Gehalt an Wasserdampf und Wasserstoff aufweist, der in einem vorteilhaften Bereich liegt. Vorzugsweise weist das Produktgas 1 einen Wasserdampfgehalt auf oder einen Gehalt an Wasserdampf und Wasserstoff, der im Bereich von 3 bis 60 Vol.-% liegt, bevorzugt im Bereich von 5 bis 50 Vol.-%, weiter bevorzugt im Bereich von 7 bis 30 Vol.-%, weiter bevorzugt von 8 bis 25 Vol.-% und besonders bevorzugt im Bereich von 9 bis 23 Vol.-%. D.h. die Bereichsangaben beziehen sich nur auf Wasserdampf, falls ein Produktgas vorliegt, das wasserstofffrei ist, oder auf die Summe aus Wasserdampf und Wasserstoff, falls ein Produktgas vorliegt, das sowohl Wasserdampf als auch Wasserstoff enthält. Erwähnenswert ist auch, dass es sich um das erste Produktgas handelt, dem Gase beigemischt werden können, jedoch nicht unbedingt müssen.

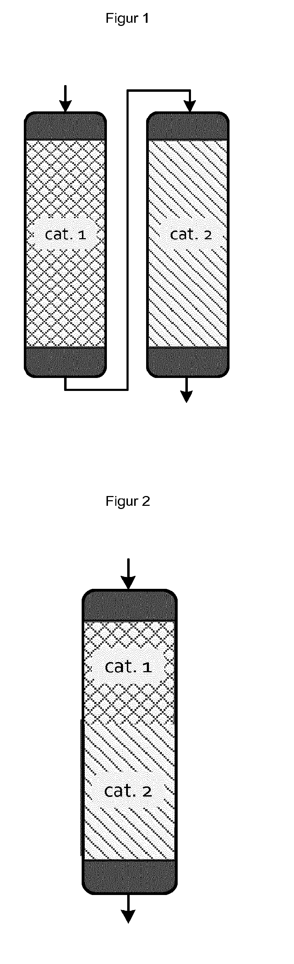

Mehrere technische Ausgestaltungen des erfindungsgemäßen Verfahrens sind in den Figuren 1 bis 6 dargestellt.

In einer bevorzugten Ausführungsform liegt der Prozessdruck des erfindungsgemäßen Verfahrens im Bereich von 1 - 200 bar, vorzugsweise im Bereich von 5 - 100 bar, weiter vorzugsweise im Bereich von 10 bis 60 bar, und insbesondere vorzugsweise im Bereich von 20 bis 40 bar liegt. Die Prozesstemperatur des Verfahrens liegt im Bereich von 500 - 1100 °C, vorzugsweise von 750 - 1050 °C, weiter vorzugsweise von 800 - 1000 °C, und insbesondere vorzugsweise von 850 - 950 °C.

Das Eduktgas, das in der ersten Verfahrensstufe eingesetzt wird, ist durch seine Zusammensetzung in Bezug auf Kohlenwasserstoff und Kohlendioxid gekennzeichnet. Vorzugsweise handelt es sich beim Kohlenwasserstoff um Methan. Das Eduktgas weist einen Gesamtgehalt an Kohlenwasserstoff, vorzugsweise Methan, und Kohlendioxid auf, der größer als 50 Vol.-% ist, vorzugsweise größer als 70 Vol.-%, weiter vorzugsweise größer als 80 Vol.-%, besonders bevorzugt größer als 90 Vol.-% und insbesondere größer als 95 Vol.-%. Vorzugsweise liegen das Methan und das Kohlendioxid im Eduktgas in äquimolaren beziehungsweise nahezu äquimolaren Mengen vor. Ein bevorzugtes Verhältnis von Methan zu Kohlendioxid liegt im Bereich von 4 zu 1 bis 1 zu 4, besonders bevorzugt im Bereich von 3 zu 1 bis 1 zu 3 und ganz besonders bevorzugt im Bereich von 2 zu 1 bis 1 zu 2. Das am meisten bevorzugte Verhältnis von Methan zu Kohlendioxid liegt bei nahe 1 zu 1. Falls es sich bei dem kohlenwasserstoffhaltigen Ausgangsgas um Ethan handelt, so liegen Kohlendioxid und Ethan vorzugsweise in einem molaren Verhältnis von 2 zu 1 vor.

In einer bevorzugten Ausführungsform des erfindungsgemäßen Verfahrens ist dem Reformierungsverfahren ein Aktivierungsprozess vorgeschaltet. Durch den Aktivierungsprozess ist es möglich, die Katalysatoren unter kontrollierten Bedingungen auf die gewünschten Prozessparameter zu stellen.

Der Aktivierungsprozess umfasst die thermische Behandlung der Katalysatoren in einer reduzierenden Gasatmosphäre bei einer Temperatur im Bereich von 300 °C bis 900 °C. Vorzugsweise werden die Katalysatoren unter Verwendung eines kontrollierten Aufheizprozesses auf die Prozesstemperatur geheizt. Die Aufheizrate liegt vorzugweise in einem Bereich von 1 °C/min bis 30 °C/min, wobei ein Bereich von 5 °C/min bis 15 °C/min bevorzugt ist.

Vorzugsweise ist der Aktivierungsprozess mit einer Konditionierung der Katalysatoren gekoppelt beziehungsweise ist die Konditionierung der Aktivierung nachgeschaltet. Unter Konditionierung ist ein Vorgang zu verstehen, bei dem die Katalysatoren stufenweise an die Prozessparameter der Zielreaktion herangeführt werden. Durch die Konditionierungsschritte wird eine unkontrollierte Verkokung der Katalysatoren während des sogenannten Anfahrens wirksam unterbunden.

Die Konditionierung der Katalysatoren besteht beispielsweise darin, dass die Katalysator in Gegenwart von Methan, Wasserdampf und/oder Wasserstoff und/oder Kohlenstoffdioxid auf die Prozesstemperatur geheizt werden. Es ist auch möglich, dass die Katalysatoren in Gegenwart von Wasserdampf konditioniert werden.

In einer weiteren Ausführungsform des Verfahrens werden die Katalysatoren direkt mit dem Eduktgas eingefahren und in den Betriebszustand des Verfahrens versetzt.

Das erfindungsgemäße Verfahren wird in einer bevorzugten Ausführungsform bei hohem Druck und/oder hoher Temperatur durchgeführt. Die Erzeugung von Wasserdampf ist in der Regel mit sehr hohen Kosten verbunden, insbesondere auch dann, wenn Wasserdampf auf hohe Temperaturen erwärmt werden muss oder unter hohen Druck gesetzt werden muss. Ein wesentlicher Aspekt des erfindungsgemäßen Verfahrens ist es, dass das Verfahren mit nur geringen Mengen an Wasserdampf im Eduktgas betrieben wird, was einen sehr wesentlichen Vorteil des erfindungsgemäßen Verfahrens gegenüber denjenigen Verfahren darstellt, die aus dem Stand der Technik bekannt sind.

In einer Ausführungsform des erfindungsgemäßen Verfahrens ist es bevorzugt, das Verfahren in Anlagen durchzuführen, welche beispielsweise an eine Biogasanlage, eine Kokereiabgasanlage angeschlossen sind oder auch an Anlagen, die über eine kostengünstige Erdgasquelle und Kohlendioxid verfügen. Hinsichtlich der kleineren dezentralen Anlagen ist anzunehmen, dass diese vorzugsweise gemäß des erfindungsgemäßen Verfahrens bei geringeren Prozessdrücken betrieben (d.h. vorzugsweise bei einem Druck < 50 bar, weiter vorzugsweise < 40 bar) werden als dies in großtechnischen Anlagen der Fall ist. Weiterhin denkbar in Verbindung mit Anlagen in Gebieten von Erdöl- oder Gasförderquellen, in denen kein Wasserdampf zur Verfügung steht beziehungsweise die Bereitstellung von Wasserdampf kostspielig wäre. Die Erzeugung von Wasserdampf für die Durchführung Reformierungsverfahrens wie es dem Stand der Technik entspricht, d.h. unter Verwendung eines hohen Anteil an Wasserdampf, kann in diesen Gebieten mit großem Aufwand verbunden sein, der aus wirtschaftlicher und technischer Sicht bisher nicht als lohnenswert erscheint.

In einer bevorzugten Ausführungsform werden die Verfahrensstufen (i) und (ii) in einem Reaktionsraum, vorzugsweise Reaktionsrohr, durchgeführt, wobei sich Katalysator der der Verfahrensstufe (i) und Katalysator der Verfahrensstufe (ii) in räumlicher Nähe befinden, vorzugsweise in direktem physischen Kontakt stehen (siehe Figur 2).

Im Sinne des erfindungsgemäßen Verfahrens ist es, wenn das Volumen des in der ersten Verfahrensstufe eingesetzten Katalysators bezogen auf das Gesamtvolumen an Katalysator einen Volumenanteil im Bereich von 5 bis 60 Vol.-% aufweist, weiter vorzugsweise einen Volumenanteil im Bereich von 10 - 45 Vol.-%, und weiter vorzugsweise einen Volumenanteil im Bereich von 10 - 30 Vol.%. Der Volumenanteil des in der zweiten und weiteren Verfahrensstufen eingesetzten Katalysators liegt (bezogen auf das Gesamtvolumen aller eingesetzter Katalysatoren) im Bereich von 40 bis 95Vol..-%, weiter vorzugsweise von 55 - 90 Vol.-%, und weiter vorzugsweise von 70 - 90 Vol.% Vorzugsweise ist der Anteil an edelmetallhaltigem Katalysator geringer als der Anteil an nicht edelmetallhaltigem Katalysator, wobei eine derartige Ausführung jedoch keine Einschränkung in Bezug auf das Verfahren darstellen soll.

Die sich in räumlicher Nähe befindlichen Katalysatoren - d.h. der edelmetallhaltige Katalysator und der nicht edelmetallhaltige Katalysator, können beispielsweise auch so in dem Reaktionsraum angeordnet sein, dass ein Teil des Katalysators, vorzugsweise der nicht edelmetallhaltige Katalysator, getauscht werden kann und der andere Teil des Katalysators, vorzugsweise der edelmetallhaltige Katalysator, regeneriert werden kann.

Die räumliche Nähe bei der Durchführung des erfindungsgemäßen Verfahrens ist aus prozesstechnischen Gründen bevorzugt. Dies liegt daran, dass die Anordnung der Katalysatoren für den ersten Verfahrensschritt und den zweiten Verfahrensschritt in der gleichen Brennkammer als technisch vorteilhaft anzusehen ist. Demgegenüber ist es nicht ausgeschlossen, dem beim ersten Verfahrensschritt gewonnenen Produktgas 1 noch Gase beizumischen, um beim Produktgas 2 die gewünschte Zusammensetzung bezüglich Kohlenmonoxid-zu-Wasserstoff-Verhältnis zu erhalten. Die Beimengung von Gas zum Produktgast 1 stellt jedoch nur eine Verfahrensvariante unter einer Vielzahl von möglichen Verfahrensvarianten dar.

### I. Edelmetallhaltiger Katalysator (Cat.1) der ersten Verfahrensstufe

In einer bevorzugten Ausführungsform ist das erfindungsgemäße Verfahren dadurch gekennzeichnet ist, dass das der edelmetallhaltiger Katalysator (Cat.1) zumindest eine Edelmetallkomponente aus der Gruppe Pt, Rh, Ru, Ir, Pd und/oder Au umfasst.

In einer bevorzugten Ausführungsform ist das erfindungsgemäße Verfahren dadurch gekennzeichnet, dass das der edelmetallhaltige Katalysator (Cat.1) als Edelmetallkomponente zumindest Iridium umfasst, vorzugsweise ist der Gehalt an iridiumhaltiger Edelmetallkomponete ≤ 3 Gew.-%, weiter vorzugsweise ≤ 2 Gew.-%, noch weiter vorzugsweise ≤ 1 Gew.-% und insbesondere vorzugsweise ≤ 0,5 Gew.-%. Die hier genannten Prozentangaben beziehen sich lediglich auf die Menge an edelmetallhaltigen Katalysatoren.

Hervorzuheben ist, dass es sich um sehr geringe Edelmetallgehalte handelt. Kennzeichnend für das erfindungsgemäße Verfahren ist es, dass eine sehr geringe Menge an Edelmetall ausreicht, um das Verfahren durchzuführen, wodurch gegenüber den im Stand der Technik bekannten Verfahren eine erhebliche Verringerung an Edelmetall möglich ist.

In diesem Zusammenhang ist darauf hinzuweisen, dass sich die edelmetallhaltigen Komponenten auf einem Katalysatorträgermaterial befinden, wobei das Katalysatorträgermaterial hochtemperaturstabil ist. Das Katalysatorträgermaterial umfasst vorzugsweise ein oxidisches Trägermaterial, weiter bevorzugt ein oxidisches Trägermaterial, das zumindest eine Komponente aus der Guppe Al, Ti, Zr, Mg, Si, Ca, La, Y, Ce aufweist.

Geeignete Träger für die edelmetallhaltigen Komponenten umfassen Oxide, die ein oder mehrere der nachfolgend genannten Oxide enthalten können: gamma, delta, theta, and alpha Aluminiumoxid (Al₂O₃), Kalziumoxide (CaO), Magnesiumoxid (MgO), Bariumoxid (BaO), Strontiumoxid (SrO), monokline und tetragonales/kubisches Zirkonoxid (ZrO₂), Scandiumoxid (Sc₂O₃), Seltenerdoxide von Yttrium, Lanthan, Cerium, Praseodym, Neodym, Samarium, Gadolinium, Dysprosium, Erbium und Ytterbium, sowie Kombinationen von diesen Oxiden und komplexe oxydische Phasen wie Spinelle, Perovskite, Pyrochlore, Fluorite, Magnetoplumbite, Hexaaluminate und Yttrium-Aluminium-Granate.

Der erfindungsgemäße Katalysator kann durch Tränkbeschichtung des Trägermaterials mit den einzelnen Komponenten hergestellt werden. In einer weiteren und vorteilhaften Ausgestaltungsform des Herstellungsverfahrens werden die Aktivkomponenten auf pulverförmiges Trägermaterial aufgebracht, das anschließend zumindest teilweise verknetet und extrudiert wird.

Der edelmetallhaltige Katalysator (Cat.1) kann auf Formkörper vorliegen, wobei diese ausgewählt sind aus der Gruppe Tabletten, Extrudate, Strangextrudate, Pellets, Beads, Monolithe oder Wabenkörper. Monolith oder Wabenkörper können aus Metall oder Keramik bestehen. Die Abformung der Aktivmasse beziehungsweise die Aufbringung der Aktivmasse auf einem Träger beziehungsweise Trägerkörpern ist von großer technischer Bedeutung für die Anwendungsgebiete des erfindungsgemäßen Katalysators. Je nach Partikelgröße und Reaktorpackung wirken sich die Form und Anordnung der Partikel auf den Druckabfall aus, der durch das Katalysatorfestbett hervorgerufen wird.

Die Herstellung von Formkörpern aus pulverförmigen Rohstoffen kann durch dem Fachmann bekannte Methoden, wie beispielsweise Tablettierung, Aggregation oder Extrusion erfolgen, wie sie u. a. im Handbook of Heterogeneous Catalysis, Vol. 1, VCH Verlagsgesellschaft Weinheim, 1997, S. 414-417 beschrieben sind, erfolgen.

In einer bevorzugten Ausführungsform des erfindungsgemäßen Verfahrens ist der edelmetallhaltiger Katalysator (Cat.1) dadurch gekennzeichnet, dass der mindestens Iridium als Aktivkomponente und zirconiumdioxidhaltiges Trägermaterial enthält, wobei
a) der Ir-Gehalt in Bezug auf die zirconiumdioxidhaltige Aktivmasse in einem Bereich von 0,01 - 10 Gew.-%, vorzugsweise von 0,05 - 5 Gew.-% und weiter vorzugsweise von 0,1 - 1 Gew.-% liegt und
b) das Zirconiumdioxid in dem zirconiumdioxidhaltigen Trägermaterial zum überwiegenden Anteil nach röntgendiffraktometrischer Analyse in der kubischen und/oder der tetragonalen Struktur vorliegt, wobei der Anteil an kubischer und/oder tetragonaler Phase > 50 Gew.-%, weiter bevorzugt > 70 Gew.-% und insbesondere bevorzugt > 90 Gew.-% ist.

In einer bevorzugten Ausführungsform des erfindungsgemäßen Katalysators weist die zirconiumdioxidhaltige Aktivmasse eine spezifische Oberfläche von > 5 m²/g, vorzugsweise > 20 m²/g, weiter vorzugsweise 50 m²/g und insbesondere bevorzugt >80 m²/g auf. Die Bestimmung der spezifischen Oberfläche des Katalysators erfolgte durch Gasadsorption nach dem BET-Verfahren (ISO 9277:1995).

Besonders vorteilhaft ist es, dass das Iridium in fein verteilter Form auf dem Zirconiumdioxid-Träger vorliegt, da hierdurch eine hohe katalytische Aktivität bei einem geringen Gehalt an Ir erreicht wird.

In einer bevorzugten Ausführungsform ist der erfindungsgemäße Katalysator dadurch gekennzeichnet, dass das Ir auf dem zirconiumdioxidhaltigen Träger vorliegt und dieser mit weiteren Elementen dotiert ist. Zur Dotierung des Zirconiumdioxid-Trägers werden bevorzugt Elemente aus der Gruppe der Seltenen Erden (d.h. aus der Gruppe Sc, Y , La, Ce, Pr, Nd, Sm, Eu, Gd, Tb, Dy, Ho, Er, Tm, Yb, Lu), Gruppe IIa (d.h. aus der Gruppe Mg, Ca, Sr, Ba,), Gruppe IVa (d.h. aus der Gruppe Si), Gruppe IVb (d.h. aus der Gruppe Ti, Hf), Gruppe Vb (d.h. aus der Gruppe V, Nb, Ta) des Periodensystems beziehungsweise deren Oxide ausgewählt.

Weitere Dotierungselemente können unter anderem sein: Platinmetalle wie Pt, Pd, Ru, Rh, Basismetalle wie Ni, Co und Fe, andere Metalle wie Mn oder andere dem Fachmann bekannte Promotoren.

Sofern der Katalysator zusätzlich zum Ir und Zirconiumdioxid auch ein oder mehrere Dotierungselemente aus der Gruppe der Seltenen Erden enthält, so ist der Gewichtsanteil an Dotierungselementen bezogen auf das Gesamtgewicht des Katalysators im Bereich von 0,01 bis 80 Gew.-%, bevorzugt im Bereich von 0,1 bis 50 Gew.-% und insbesondere bevorzugt im Bereich von 1,0 bis 30 Gew.-%.

Die iridiumhaltigen Katalysatoren, die bevorzugt im erfindungsgemäßen Verfahren eingesetzt werden, sind in EP-Anmeldung Nr. 12174258.9 mit dem Prioritätsdatum vom 29.06,2012 vorbeschrieben. Als Erfinder werden E. Schwab, A. Milanov et al. genannt. Das erfindungsgemäße Verfahren ist aber nicht auf dem Einsatz von diesen Katalysatoren beschränkt.

### II. Nicht edelmetallhaltige Katalysatoren (Cat.2, 3) der weiteren Verfahrensstufen

In einer bevorzugten Ausführungsform umfassen die nicht edelmetallhaltigen Katalysatoren der zweiten und weiteren Verfahrensstufen zumindest ein Aktivmetall aus der Gruppe Nickel und/oder Kobalt.

Die nicht-edelmetallhaltigen Katalysatoren der zweiten und weiteren Verfahrensstufen sind dadurch gekennzeichnet, dass diese die Umsetzung von Kohlenwasserstoffen mit Kohlenstoffdioxid und/oder Wasserdampf zu Synthesegas unter sehr anspruchsvollen Bedingungen katalysieren ohne dabei zu verkoken.

In einer bevorzugten Ausführungsform des erfindungsgemäßen Verfahren werden solche nicht edelmetallhaltige Katalysatoren (Cat.2, Cat.3 etc.) in den weiteren Verfahrensstufen eingesetzt, welche dadurch gekennzeichnet sind, dass diese Kohlenwasserstoffen mit Kohlenstoffdioxid und/oder Wasserdampf zu Synthesegas effektiv umsetzen ohne dabei zu verkoken, wobei der Wasserdampfanteil beziehungsweise die Summe von Wasserdampf und Wasserstoff in dem umzusetzenden Gasgemisch (Produktgas 1 beziehungsweise Produktgas 1 und weitere Gase) im Bereich von 3 bis 60 Vol.-% liegt, bevorzugt im Bereich von 5 bis 50 Vol.-%, weiter bevorzugt im Bereich von 7 bis 30 Vol.-%, weiter bevorzugt von 8 bis 25 Vol.-% und besonders bevorzugt im Bereich von 9 bis 23 Vol.-%. D.h. die Bereichsangaben beziehen sich nur auf Wasserdampf, falls ein Produktgas vorliegt, das wasserstofffrei ist, oder auf die Summe aus Wasserdampf und Wasserstoff, falls ein Produktgas vorliegt, das sowohl Wasserdampf als auch Wasserstoff enthält. Erwähnenswert ist auch, dass es sich um das erste Produktgas handelt, dem Gase beigemischt werden können, jedoch nicht unbedingt müssen.

In einer bevorzugten Ausführungsform des erfindungsgemäßen Verfahrens ist der nicht edelmetallhaltiger Katalysator dadurch gekennzeichnet, dass dieser Nickel umfasst, welcher sehr hochdispers auf einem Trägeroxid vorliegt und dass das Trägeroxides aus sehr kleinen Partikeln aus Magnesiumspinell (MgAl₂O₄) besteht beziehungsweise diese enthält.

In einer bevorzugten Ausführungsform des erfindungsgemäßen Verfahrens umfasst der nicht edelmetallhaltiger Katalysatorträger ein Magnesiumspinell, dass sich in innigem Kontakt mit einer Mischoxidphase aus Nickel und Magnesium befindet. Für diesen Katalysator beziehungsweise Katalysatorvorläufer ist es kennzeichnend, dass sowohl die Nickel-haltige als auch die spinellhaltige Phase sehr geringe Kristallitgrößen aufweist. Im Fall der spinellhaltigen Phase ist die mittlere Kristallitgröße < 100 nm, vorzugsweise ist die mittlere Kristallitgröße ≤ 70 nm, weiter vorzugsweise ist die mittlere Kristallitgröße ≤ 40 nm.

In einer Ausführungsform, die besonders bevorzugt ist, umfasst der nicht edelmetallhaltiger Katalysator zumindest die drei Phasen Nickel-Magnesium-Mischoxid, Magnesium-Spinell und Aluminiumoxidhydroxid und ist dadurch gekennzeichnet, dass das Nickel-Magnesium-Mischoxid eine mittlere Kristallitgröße von ≤ 100 nm, vorzugsweise ≤ 70 nm, weiter vorzugsweise ≤ 40 nm, und die Magnesium-Spinellphase eine mittlere Kristallitgröße von ≤ 100 nm, vorzugsweise ≤ 70 nm, weiter vorzugsweise ≤ 40 nm aufweist, und einen Nickelanteil im Bereich von 6 - 30 mol-% und ein Magnesiumanteil im Bereich von 8 - 38 mol-%, vorzugsweise im Bereich von 23 - 35 mol-%, aufweist. Der Aluminiumanteil liegt vorzugsweise im Bereich von 50 - 70 mol.-%, und die BET-Oberfläche im Bereich von 10 - 200 m²/g liegt.

Die Phasenzusammensetzung eines besonders bevorzugten Katalysators ist dadurch gekennzeichnet, dass die Intensität des Beugungsreflexes bei 43,15° ± 0,15° 2θ (2 Theta) (d = 2,09 ± 0,01 Å) kleiner oder gleich der Intensität des Beugungsreflexes bei 44,83 ± 0,20° 2θ (d = 2,02 ± 0,01 Å) ist, weiter vorzugweise ist die Intensität des Beugungsreflexes bei 43,15° ± 0,15° 2θ (2 Theta) (d = 2,09 ± 0,01 Å) kleiner als die Intensität des Reflexes bei 44,83 ± 0,20° 2θ (d = 2,02 ± 0,01 Å), und noch weiter vorzugsweise liegt das Intensitätsverhältnis der beiden Beugungsreflexe I_{(43,15°)}/I_{(44,83°)} von 0,3 bis 1,0, vorzugsweise von 0,5 bis 0,99, noch vorzugsweise von 0,6 bis 0,97, und besonders vorzugsweise von 0,7 bis 0,92.

Die oben beschriebenen nickelhaltigen Katalysatoren zeichnen sich mit einem verbesserten Eigenschaftsprofil, das sich sowohl in einer verbesserten Langzeitsinterstabilität als auch einem verbesserten Verkokungsverhalten unter den anspruchsvollen Bedingungen der zweiten und weiteren Verfahrensstufen des erfindungsgemäßen Verfahren äußert. Die Herstellung von den obengenannten nickelhaltigen Katalysatoren kann beispielweise nach dem in der PCT-Anmeldung WO2013/068905A1 beschriebenen Verfahren erfolgen, das als Prioritätsdatum den 08.11.2011 beansprucht.

In einer weiter bevorzugten Ausführungsform des erfindungsgemäßen Verfahrens ist der nicht edelmetallhaltiger Katalysator dadurch gekennzeichnet, dass dieser Kobalt und zumindest ein weiteres Element aus der Gruppe Ba, Sr, La enthält, wobei der Co-Gehalt im Bereich von 2 - 15 mol-%, vorzugsweise 3 - 10 mol-% und weiter bevorzugt im Bereich von 4 - 8 mol-%, der Gehalt an dem zumindest einem weiteren Element aus der Gruppe Ba, Sr, La in einem Bereich von 2 - 25 mol-%, vorzugsweise 3 -15 mol-%, weiter bevorzugt 4 - 10 mol-%, der Gehalt an Al in einem Bereich von 70 - 90 mol-% liegt.

Der kobalthaltiger Katalysator, der in der zweiten und weiteren Verfahrensstufen des erfindungsgemessen Verfahrens bevorzugt eingesetzt wird ist dadurch gekennzeichnet, dass der Katalysator eine Hexaaluminatphase umfasst. Der Begriff Hexaaluminatphase umfasst Phasen, die Schichtstrukturen aufweisen, die ähnlich oder gleich den Typen der Magnetoplumbitstruktur und/oder der beta-Aluminatstruktur - wie beta'- oder beta"-Aluminatstruktur sind. Sofern der Katalysator Nebenphasen enthält, dann liegt der Anteil an Nebenphase in einem Bereich von 0 - 50 Gew.-%, vorzugsweise in einem Bereich von 3 - 40 Gew.-% und weiter vorzugsweise in einem Bereich von 5 - 30 Gew.-%. Vorzugsweise besteht die Nebenphase aus Oxiden, wobei diese weiter vorzugsweise aus der Gruppe alpha-Aluminiumoxid, theta-Aluminiumoxid, LaAlO₃, BaAl₂O₄, SrAl₂O₄, CoAl₂O₄, La-stabilisiertes Aluminiumoxid und/oder La-stabilisiertes Aluminiumoxidhydroxid.

Für den erfindungsgemessen Verfahren sind diejenigen kobalt-hexaaluminathaltigen Katalysatoren besonders bevorzugt, deren molares Verhältnis von Kobalt zu Aluminium (d.h. das n_{Co}/n_{Al}-Verhältnis) im Bereich von 0,05 bis 0,09 und besonders bevorzugt im Bereich von 0,06 bis 0,08 liegt. In einer bevorzugten Ausgestaltung des erfindungsgemäßen Verfahrens liegt das molare Verhältnis von M^{BaSrLa} zu Aluminium (d.h. das n_{MBaSrLa} /n_{Al}-Verhältnis) in dem eingesetzten kobalt-hexaaluminat Katalysator in einem Bereich von 0,09 bis 0,25, besonders bevorzugt im Bereich von 0,092 bis 0,20. Vorzugsweise liegt das molare Verhältnis von Co zu M^{BasrLa} (d.h. das n_{Co}/n_{MBaSrLa}-Verhältnis) im Bereich von 1,0 bis 0,3 und besonders bevorzugt im Bereich von 0,85 bis 0,40. Die Abkürzung M^{BaSrLa} kennzeichnet, dass zumindest ein Element aus der Gruppe Ba, Sr, La enthalten sind.

Die oben beschriebenen kobalthaltigen Katalysatoren zeichnen sich mit einem verbesserten Eigenschaftsprofil, das sich sowohl in einer verbesserten Langzeitsinterstabilität als auch einem verbesserten Verkokungsverhalten unter den anspruchsvollen Bedingungen der zweiten und weiteren Verfahrensstufen des erfindungsgemäßen Verfahren äußert. Die Herstellung von den obengenannten kobalthaltigen Katalysatoren kann beispielweise nach dem in der PCT-Anmeldung WO 2013/118078A1 (das Prioritätsdatum der Anmeldung ist der 10.02.2012) beschriebenen Verfahren erfolgen.

In einer weiter bevorzugten Ausführungsform des erfindungsgemäßen Verfahrens ist der nicht edelmetallhaltiger Katalysator dadurch gekennzeichnet, dass dieser zumindest 65 - 95 Gew.-%, vorzugsweise 70 - 90 Gew.-% Nickelhexaaluminat und 5 - 35 Gew.-%, vorzugsweise 10 - 30 Gew.-% kristalline oxydische Nebenphase enthält, wobei der Nickelgehalt des Katalysators ≤ 8 mol-%, vorzugsweise ≤ 7 mol-%, weiter vorzugsweise ≤ 6 mol-%, noch weiter vorzugsweise ≤ 3 mol-%, besonders vorzugsweise ≤ 2,5 mol-% und insbesondere vorzugsweise ≤ 2 mol-%, die nickelhexaaluminathaltige Phase zumindest ein Zwischenebenenkation aus der Gruppe Ba, Sr und/oder La mit einem molaren Zwischenebenenkation-zu-Aluminium-Verhältnis im Bereich von 1 : 6 - 11, vorzugsweise von 1 : 7 - 10 und insbesondere vorzugsweise von 1 : 8 - 10, die kristalline oxydische Nebenphase zumindest LaAlO₃, SrAlO₄ und/oder BaAlO₄ umfasst, BET-Oberfläche des Katalysators ≥ 5 m²/g, vorzugsweise ≥ 10 m²/g ist. Die Angabe des molaren Nickelgehaltes bezieht sich auf die Betrachtung von den im Katalysator enthaltenen Elementen, die Kationen bilden, d.h. Al, Ni und Zwischenebenenelemente. Somit wird das Vorliegen von Sauerstoff nicht berücksichtigt. Im Rahmen der vorliegenden Offenbarung ist bei den Bereichsangaben der molaren Verhältnisse von Aluminium zu Zwischenebenenkation ist zu beachten, dass die Stoffmenge an Zwischenebenenkation auch die jeweilige Stoffmenge an Nickel einschließt.

Vorzugsweise enthält der nickelhexaaluminathaltige Katalysator zumindest 65 - 95 Gew.-%, vorzugsweise 70 - 90 Gew.-% Nickelhexaaluminat in Form von β"-Aluminat mit [114]-Reflex bei 35,72 2θ [°] und/oder Magnetoplumbit und 5 - 35 Gew.-%, vorzugsweise 10 - 30 Gew.-% kristalline oxydische Nebenphase, wobei diese weiter vorzugsweise Oxide aus der Gruppe alpha-Aluminiumoxid, theta-Aluminiumoxid, LaAlO₃, BaAl₂O₄, SrAl₂O₄, CoAl₂O₄, La-stabilisiertes Aluminiumoxid und/oder La-stabilisiertes Aluminiumoxidhydroxid enthält.

Durch das erfindungsgemäße Verfahren ist es möglich, ein Synthesegas herzustellen, dass ein geeignetes Wasserstoff-zu-Kohlenmonoxid-Verhältnis aufweist, das vorzugsweise im Bereich von 0,5 bis 2, weiter vorzugsweise ≤ 1,5 und insbesondere vorzugsweise ≤ 1,2 ist. In jedem Einzelfall hängt die Zielzusammensetzung des Synthesegases dann natürlich auch davon ab, zu welchem speziellen Prozess das Synthesegas den nachgeschalteten Anlagen verwendet wird. Beispielsweise können Methanol-Synthese, direkte Dimethylether-Synthese, Gas-to-Liquid-Synthesen, oder Fischer-Tropsch-Verfahren zur Synthese von längerkettigen Kohlenwasserstoffen nachgeschaltet sein oder die Produktion von bestimmten Monomeren oder sonstigen Komponenten.

Kurze Beschreibung der Figuren:
- Fig. 1: zeigt eine schematische Darstellung mit zwei separaten Reaktoren, die in Reihe geschaltet sind. Die Ausgangsleitung des ersten Reaktors ist mit der Eingangsleitung des zweiten Reaktors verbunden.
- Fig. 2: zeigt eine schematische Darstellung eines Reaktors, der mit einem ersten Katalysatormaterial und einem zweiten Katalysatormaterial befüllt ist. Das erste Katalysatormaterial (der edelmetallhaltige Katalysator) ist im oberen Bereich des Reaktors und das zweite Katalysatormaterial (der nicht edelmetallhaltige Katalysator) ist im unteren Bereich des Reaktors. Der Reaktor wird von oben nach unten mit Gas beziehungsweise mit Eduktgas durchströmt.

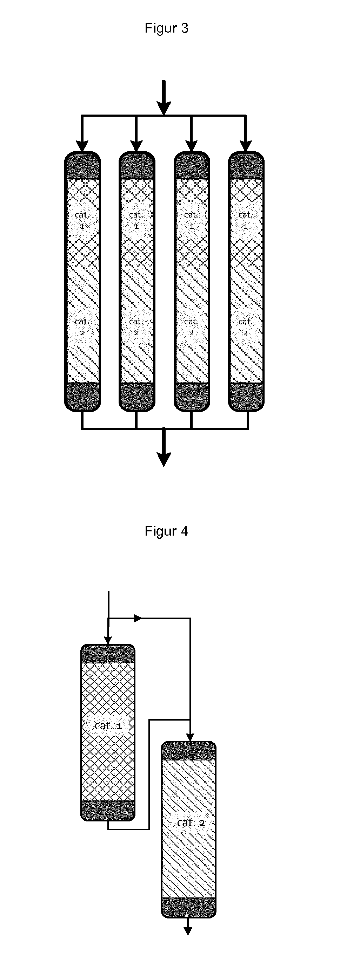

- Fig. 3: zeigt eine schematische Darstellung von vier Reaktoren mit strukturierten Katalysatorbetten, wobei die Reaktoren parallel angeordnet sind. Die Reaktoren werden von oben nach unten durchströmt, wobei das Eduktgas zunächst mit Katalysator 1 und anschließend mit Katalysator 2 in Kontakt gebracht wird.
- Fig. 4: zeigt eine schematische Darstellung von zwei in Reihe geschalteten Reaktoren, von denen der erste mit Katalysator 1 und der zweite mit Katalysator 2 befüllt ist. Im Unterschied zu der Darstellung in Figur 1 weist die Eduktgaszufuhr eine Verbindungsleitung auf, die zur Produktgasleitung 1 führt, die in den zweiten Reaktor führt. Hierdurch kann dem Produktgas 1 ein Eduktgas beigemischt werden.

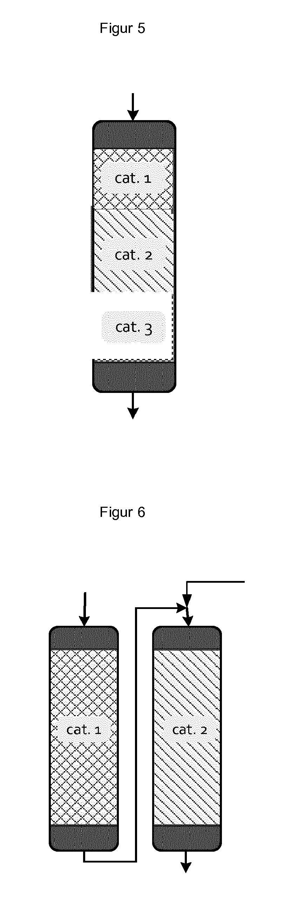

- Fig. 5: zeigt eine Darstellung des gleichen Reaktors der in Figur 2 dargestellt ist, wobei jedoch der Reaktor mit drei verschiedenen Katalysatormaterialien befüllt ist. In der ersten Bettschicht ist der Katalysator 1, in der zweiten Bettschicht ist der Katalysator 2 und in der dritten Bettschicht ist der Katalysator drei angeordnet.
- Fig. 6: zeigt eine Darstellung des Reaktors, der in der Figur 1 gezeigt ist, wobei die Produktgasleitung mit einer weiteren Gaszufuhrleitung ausgestattet ist. Mittels der Gaszufuhrleitung ist es möglich, dem Produktgas 1 noch Gas hinzuzuführen. Beispielsweise kann es sich hier um die Zufuhr von Kreisgas (Recycle-Gas) handeln.

### III. Beispiele

### Herstellung der Beispielproben

Herstellung von edelmetallhaltigen Katalysatoren für die erste Stufe des erfindungsgemäßen Verfahrens:

Zur Herstellung des erfindungsgemäßen Katalysators (Cat.1b) wurden 198 g yttriumstabilisiertes Zirconiumdioxid mit wässriger Iridiumchloridlösung imprägniert. Zunächst wurden zur Herstellung der Iridiumchloridlösung 3,84 g IrCl₄*H₂O in 20 mL destilliertem Wasser gelöst und die Lösung mit Wasser aufgefüllt. Die Menge an Wasser war so gewählt worden, um mit der Lösung 90 % des freien Porenvolumens des Trägeroxids befüllen zu können. Das freie Porenvolumen betrug 0,2 cm³/g. Das yttriumstabilisierte Zirconiumdioxid hatte einen Yttriumoxidanteil (Y₂O₃) von 8 Gew.-% und lag als Splitt mit einer Teilchengröße im Bereich von 0,5 - 1,0 mm vor. Der Splitt aus stabilisiertem Trägeroxid wurde in einer Tränktrommel vorgelegt und unter Umwälzen mit der Iridiumchloridlösung sprühgetränkt. Nach dem Tränken wurde das Material weitere 10 Minuten umgewälzt und anschließend für 16 Stunden bei 120°C in einem Umlufttrockenschrank getrocknet. Die Kalzinierung des getrockneten Materials erfolgte bei 550°C für zwei Stunden. Der hierbei erhaltene iridiumhaltige Katalysator S2 hatte einen Iridiumgehalt von 1,0 g Iridium pro 100g Katalysator.

Die iridiumhaltigen Katalysatoren Cat.1a und Cat.1c wurden nach der für Cat.1b beschriebenen Prozedur unter Verwendung von entsprechendem Träger synthetisiert. (D.h., ein yttriumstablisierter Träger im Falls von Cat.1.c und ein Ce/La-stabilisierter Träger im Fall von Cat.1a.) Tabelle 1 zeigt eine zusammenfassende Darstellung zu den Zusammensetzungen der getesteten Aktivmassen und den Metallgehalt.

| Probe | Iridium-Gehalt [Gew.-%] | Träger | Stabilisator | Stabilisatorgehalt [Gew.-% als Oxid] |
|---|---|---|---|---|
| Cat.1a | 2 | ZrO₂ | Ce, La | 22 |
| Cat.1b | 1 | ZrO₂ | Y | 8 |
| Cat.1c | 0,1 | ZrO₂ | Y | 8 |

Herstellung von nicht edelmetallhaltigen Katalysatoren für die zweite und weiteren Stufen des erfindungsgemessen Verfahren:

Die Herstellung von den eingesetzten Nickel-Magnesium Mischoxid auf Magnesium-Aluminium Spinell Katalysatoren erfolgte nach dem in WO 2013/068905A1 beschriebenen Verfahren. Für die Herstellung von Cat.2a wurden 261,7 g pulverfömiges Nickelnitrat-Hexahydrat (Ni(NO₃)₂*6H₂O von der Firma Merck) in einem Becherglas vorgelegt und durch Erwärmung mittels Heizplatte bei einer Temperatur von ca. 100 °C aufgeschmolzen. In das Becherglas mit der Nitratsalzschmelze wurden anschließend 400 g vorgewärmtes Hydrotalcit-Pulver eingebracht, wobei die Nitratsalzschmelze während des Einbringens des Hydrotalcits mittels eines mechanischen Rührwerks auf einer Heizplatte durchmischt wurde. Der Antrieb des Rührwerks war über der Öffnung des Becherglases angeordnet. Als Hydrotalcit wurde Pural MG30 von der Firma Sasol eingesetzt. Vor dem Einbringen des Hydrotalcits war dieser für 30 Minuten bei 130 °C in einem Umluftofen erwärmt worden. Das Einbringen des Hydrotalcits in die Schmelze wurde in mehreren Teilschritten und über einen Zeitraum von insgesamt 10 Minuten durchgeführt. Das Becherglas mit dem Gemisch aus Hydrotalcit und Salzschmelze wurde für 30 Minuten bei 130 °C im Ofen temperiert und anschließend ca. 5 Minuten mit einem Rührwerkzeug und weitere 2 Minuten mit Ultra-Turrax-Rührer durchmischt.

Das hierbei erhaltene Gemisch aus Nitratsalz und Hydrotalcit wurde nach dem Abkühlen in zwei Teile von ca. 330 g aufgeteilt, die dann jeweils in einem Drehkugelofen einer Tieftemperatur-Kalzinierung unterzogen wurden. Dazu wurden die Proben in einen Quarzglaskolben eingebracht, der im Drehkugelofen befestigt wurde und unter Durchleiten eines Luftstroms von 1 L/min mit einer Umdrehungsgeschwindigkeit von 12 Umdrehungen pro Minute rotiert wurde. Der Quarzkolben mit dem Probengemisch wurde schrittweise über drei unterschiedliche Temperaturstufen von 120 °C, 180 °C und 280 °C auf eine Zieltemperatur von 425 °C geheizt. Die Verweilzeit der Probe bei den einzelnen Temperaturstufen der Aufheizphase sowie bei der Zieltemperatur war jeweils 2 Stunden. Als Aufheizrate wurden 2 °C/Minute verwendet. Das bei der Tieftemperatur-Kalzinierung erhaltene Produkt wurde mit (5 Gew.-%) Schmiermittel gemischt und mit einer mechanischen Stempelpresse (XP1 von der Firma Korsch) unter Anwendung einer Presskraft im Bereich von 30 bis 35 kN zu Tabletten verpresst.

Als Schmiermittel können beispielsweise Graphit, Staerinsäure beziehungsweise Magnesiumstearat verwendet werden. Die hierbei erhaltenen Tabletten hatten eine Durchmesser von 13 mm und eine Dicke von ca. 4 - 5 mm. Die Tabletten wurden mit einer Rotorsiebmühle bei einer Rotationsgeschwindigkeit von 70 U/min vorzerkleinert und durch ein Sieb gepresst. Das vorzerkleinerte Material wurde anschließend gesiebt, um die Zielfraktion mit einer Partikelgröße von 500 bis 1000 µm abzutrennen. Die Siebung erfolgte mit einer Siebmaschine der Firma Retsch (Model AS 200) unter Verwendung einer Rüttelfrequenz von 60 Hz. Das bei der Siebung erhaltene Material wurde einer Hochtemperatur-Kalzinierung bei 950 °C unterzogen. Hierzu wurde das Probenmaterial in einem Muffelofen unter Durchleiten eines Luftstroms (von 6 L/min) und unter Verwendung einer Aufheizrate von 5 °C/Minute auf 950 °C erhitzt, 4 Stunden bei 950 °C temperiert und danach auf Raumtemperatur abgekühlt.

Die Herstellung von den kobalthexaaluminathaltigen Katalysatoren erfolgte nach dem in WO 2013/118078A1 beschriebenen Verfahren. Zur Herstellung des Katalysators Cat.2b werden zunächst Kobalt- und ein Lanthannitrat, die sich in einem Becherglas befinden, mit 250 mL destilliertem Wasser versetzt und vollständig gelöst. Bei dem Kobaltnitrat handelt es sich um 83,1 g Co(NO₃)₃x6H₂O und beim Lanthannitrat handelt es sich um 284,9 g La(NO₃)₃x6H₂O. Die Metallsalzlösung wird mit 250 g Böhmit versetzt, woraufhin eine Suspension entsteht. Als Böhmit wird Disperal von SASOL verwendet.

Die Suspension wird für eine Zeitdauer von 15 Minuten mit einem mechanisch angetriebenen Rührwerk gerührt, wobei die Rührgeschwindigkeit durch 2000 U/Minute gekennzeichnet ist. Anschließend wird die Suspension mittels Pipette in ein Kältebad aus flüssigem Stickstoff eingetropft, um nahezu kugelförmige Teilchen mit einem Teilchendurchmesser von 5 mm auszufrieren. Die eingefrorenen Suspensionsteilchen werden zunächst mit einer Gefriertrocknungsanlage getrocknet und anschließend zur Zerkleinerung durch ein Sieb gepresst. Die Maschenweite des hier verwendeten Siebs beträgt 500 µm.

Im Anschluss an die Gefriertrocknung und Zerkleinerung wird das Material in einem Ofen bei 520 °C vorkalziniert. Danach wird das kalzinierte Material mit einer Stempelpresse zu Tabletten verpresst, die Tabletten anschießend zerkleinert und durch ein Sieb der Maschenweite 1 mm gedrückt. Die Tabletten haben einen Durchmesser von 13 mm und eine Dicke von 3 mm. Die Zielfraktion hat eine Teilchengröße von 500 bis 1000 µm.

Zur Hochtemperaturkalzinierung wird das nach der Siebung erhaltene Material in einem Muffelofen für 30 Stunden bei 1100 °C geheizt, wobei ein Luftstrom von 6 Liter/Minute über das Material geleitet wird. Der Ofen wird mit einer Aufheizrate von 5 °C auf die Temperatur von 1100 °C erwärmt.

Tabelle 2 zeigt eine zusammenfassende Darstellung zu den molaren Zusammensetzungen der getesteten Katalysatoren Cat.2a und Cat.2b sowie die entsprechenden BET Oberflächen der Proben.

| Probe | M₁/ Mol.-% | M₂/ Mol.-% | M₃/ Mol.-% | SA [m²/g] |
|---|---|---|---|---|
| Cat.2a | Ni / 14 Mol.-% | Mg / 29 Mol.-% | Al / 57 Mol.-% | 42 |
| Cat.2b | Co / 6 Mol.-% | La / 14 Mol.-% | Al / 80 mol.-% | 8,3 |

### Katalytische Untersuchungen

Bei den Beispielen für die Erfindung werden die Beispiele für die zumindest erste Verfahrensstufe und die Beispiele für die zumindest zweite Verfahrensstufe angeführt, die in unabhängigen katalytischen Untersuchungen erzielt wurden. Diese Beispiele dienen lediglich der Verdeutlichung, dass das erfindungsgemäße Verfahren in der vorliegend beschriebenen Form technisch ausführbar ist. Die bevorzugte räumliche Nähe des edelmetallhaltigen (der ersten Verfahrensstufe) und des nicht edelmetallhaltigen (in der zweiten Verfahrensstufe) in einem Reaktor und die zeitliche Nähe bei der Durchführung dieser Experimente ist vorliegend nicht gegeben. Dem Fachmann erschließt sich daraus jedoch unmittelbar und eindeutig die Machbarkeit des erfindungsgemäßen Verfahrens.

### I. Katalytisches Verfahren, das die erste Verfahrensstufe illustriert.

Die katalytischen Untersuchungen zur Reformierung eines kohlenwasserstoffhaltigen Gases in Gegenwart von CO₂, welche die erste Stufe des erfindungsgemessen Verfahren illustrieren, wurden mittels eines Katalysatorteststandes durchgeführt, der mit sechs parallel angeordneten Reaktoren ausgerüstet war. Zur Vorbereitung der Untersuchungen wurden die einzelnen Reaktoren mit jeweils 20 mL Katalysatorprobe befüllt.

Eine Übersicht zu den durchgeführten katalytischen Untersuchungen mit den iridiumhaltigen Katalysatoren Cat.1a, Cat.1b und Cat.1c ist in Tabelle 3 gezeigt. Zunächst wurden die mit den Katalysatoren befüllten Reaktoren in kontrollierter Weise unter Trägergasatmosphäre von 25 °C auf die Zieltemperatur geheizt. Als Trägergas wurde Stickstoff verwendet. (Denkbar ist, das Aufheizen in Gegenwart einer reduzierenden Gasatmosphäre vorzunehmen.) Zum Aufheizen der Reaktoren wurde eine Aufheizrate von 10 °C/min gewählt. Nachdem die Reaktoren mit den Katalysatoren 0,5 h auf der Zieltemperatur im Stickstoffstrom gelagert wurden, wurden diese dem Reformiergas ausgesetzt.

Im Rahmen der katalytischen Untersuchung wurden die einzelnen Proben einer Sequenz von unterschiedlichen Testbedingungen ausgesetzt. Bei der ersten Testbedingung der Sequenz (c1) wurde der Katalysator Cat.1b bei 850 °C gelagert und einem Eingangsgas ausgesetzt, welches äquimolare Mengen CH₄/CO₂ und kein Wasserdampf enthielt. Anschließend wurden die Katalysatoren Cat.1a, Cat.1b und Cat.1c auf 950°C erhitzt und mit einem Reformiergas enthaltend 10 Vol.-% Wasserdampf sowie äquimolaren Anteile CH₄ und CO₂ ausgesetzt (Testbedingung c2). Zum Schluss wurde der Wasserdampfgehalt des Reformiergases von 10 Vol.-% auf 0 Vol.-% reduziert, was die Testbedingungen c3 entsprach. Alle katalytischen Untersuchungen wurden in Gegenwart von 5 Vol.-% Argon als internem Standard durchgeführt, das dem Eduktfluid aus analysetechnischen Gründen zugeführt wurde, um die Stoffwiederfindungsrate zu kontrollieren.

Die iridiumhaltigen Katalysatoren von Beispiel Cat.1a bis Cat.1c, die in Verbindung mit dem erfindungsgemäßen Verfahren verwendet wurden, und die bei 850-950°C in Gegenwart von 10 Vol.-% und schließlich 0 Vol.-% Wasserdampf getestet wurden, zeigen keine Deaktivierung und/oder Verkokung und einen sehr hohen Umsatz an CO₂ und CH₄. Die so erhaltenen Produktgasgemische enthalten bis 15 Vol.-% Wasserdampf und/oder bis zu 50 Vol.-% Wasserstoff und Wasserdampf in Summe. Der Wasserdampf bzw. Wasserdampf plus Wasserstoff Gehalt im Produktgas ist eine Funktion des erreichten CH₄-Umsatzes und wird zusätzlich von der Temperatur beeinflusst (Einfluss auf die Gleichgewichtslage der Reformieung und Wasser-Gas-Shift-Reaktionen).

Die vorliegend gewählten Testbedingungen waren hinsichtlich der physikalischen-chemischen Bedingungen so anspruchsvoll, dass es überhaupt nur mittels der eingesetzten iridiumhaltigen Katalysatorproben möglich war, hohe Umsätze und stabile Leistungseigenschaften (Performance) über längere Zeit zu erzielen.

**Tabelle 3** zeigt eine zusammenfassende Darstellung der Reaktionsbedingungen und den erzielten Umsätze für die iridiumhaltigen Katalysatoren Cat.1a, Cat.1b und Cat.1c. Das eingesetzte Reformiergas hatte ein äquimolares Verhältnis an CH₄ und CO₂ und 5 Vol.-% Argon als internem Standard. Alle Versuche wurden bei einer Temperatur von 850-950°C und Reaktordruck von 20 bar durchgeführt.

| Katalysator | Testbedingungen/Eingangsgas | | | | | Ergebnisse | | |
|---|---|---|---|---|---|---|---|---|
| | Temp. [°C] | CH₄ [vol. %] | CO₂ [vol. %] | H₂O [vol. %] | H₂ [vol. %] | CH₄-Conv. [%] | CO₂-Conv. [%] | H₂/CO-ratio |
| Cat.1b_c1 | 850 | 47,5 | 47.5 | 0 | 0 | 55 | 73 | 0,7 |
| | | | | | | | | |
| Cat.1a_c2 | 950 | 42,5 | 42,5 | 10 | 0 | 80 | 80 | 0,9 |
| Cat.1b_c2 | 950 | 42,5 | 42,5 | 10 | 0 | 82 | 83 | 0,9 |
| Cat.1c_c2 | 950 | 42,5 | 42,5 | 10 | 0 | 80 | 82 | 0,9 |
| | | | | | | | | |
| Cat.1a_c3 | 950 | 47,5 | 47.5 | 0 | 0 | 75 | 87 | 0,8 |
| Cat.1b_c3 | 950 | 47,5 | 47.5 | 0 | 0 | 75 | 88 | 0,8 |
| Cat.1c_c3 | 950 | 47,5 | 47.5 | 0 | 0 | 35 | 51 | 0,5 |
| | | | | | | | | |
| Der Eingangsgas enthält 5vol.% Argon als interner Standard | | | | | | | | |

### II. Katalytisches Verfahren, das die zumindest zweite Verfahrensstufe illustriert.

Die katalytischen Untersuchungen zur Reformierung eines kohlenwasserstoffhaltigen Gases in Gegenwart von CO₂, welche die zweite und weiteren Stufen des erfindungsgemessen Verfahren illustrieren, wurden ebenfalls mittels eines Katalysatorteststandes durchgeführt, der mit sechs parallel angeordneten Reaktoren ausgerüstet war. Zur Vorbereitung der Untersuchungen wurden die einzelnen Reaktoren mit jeweils 20 mL Katalysatorprobe befüllt. Die Untersuchungen wurden in Gegenwart von 5 vol.-% Argon als Standardgas durchgeführt, das dem Eduktfluid aus analysentechnischen Gründen zugefügt wurde, um die Stoffwiederfindungsrate zu kontrollieren.

Eine zusammenfassende Darstellung zu den Prozessbedingungen, welche die Katalysatoren Cat.2a und Cat.2b ausgesetzt wurden sowie die dabei erzielten Ergebnisse der Reformierungsuntersuchungen sind in Tabelle 4 wiedergegeben.

In Bezug auf die katalytischen Untersuchungen ist zu sagen, dass die Testbedingungen während der Untersuchung stufenweise geändert wurden, wobei der Anteil von Wasserstoff im Eingangsgas in den Testphasen s1 - s5 von 40 Vol.-% bis 10 Vol.-% sukzessiv reduziert wurde. In den Phasen s6 und s7 wurde zuerst ein Teil und anschließend die komplette Wasserstoffmenge durch Wasserdampf ersetzt. Durch die stufenweise Änderung des Wasserstoffanteils im Eingangsgas wurde eine Veränderung des CH₄/CO₂ Umsatzes in der ersten Verfahrensstufe simuliert. Während 40 Vol.-% H₂ bzw. H₂ + H₂O einen CH₄/CO₂ Umsatz von etwa 70% entsprechen, sind die Testbedingungen mit 10 Vol.-% H₂ und/oder 10 Vol.-% H₂ + H₂O und/oder 10Vol.-% H₂O für einen CH₄/CO₂ Umsatz von etwa 10% repräsentativ. Bei den Versuchen wurde aus sicherheitstechnischen Gründen auf die Zugabe von Kohlenmonoxid zum Eingangsgas verzichtet.

Die untersuchten Katalysatoren Cat.2a und Cat.2b zeigten hohe Aktivität und sehr gute Langzeitstabilität sowie Verkokungsresistenz unter den untersuchten Testbedingungen s1 - s7. Die vorliegend gewählten Testbedingungen waren hinsichtlich der physikalischen-chemischen Bedingungen so anspruchsvoll, dass es überhaupt nur mittels der eingesetzten nickel- sowie kobalt-haltigen Katalysatorproben möglich war, hohe Umsätze und stabile Leistungseigenschaften (Performance) über längere Zeit zu erzielen.

Tabelle 4 zeigt eine zusammenfassende Darstellung der Reaktionsbedingungen und den erzielten Umsätze für die nickel- und kobalt-haltigen Katalysatoren Cat.2a und Cat.2b. Das eingesetzte Reformiergas hatte ein äquimolares Verhältnis an CH₄ und CO₂ und 5 Vol.-% Argon als internem Standard. Alle Versuche wurden bei einer Temperatur von 850-950°C und Reaktordruck von 20 bar durchgeführt.

| Katalysator | Testbedingungen/Eingangsgas | | | | | Ergebnisse | | |
|---|---|---|---|---|---|---|---|---|
| | Temp. [°C] | CH₄ [vol. %] | CO₂ [vol. %] | H₂O [vol. %] | H₂ [vol. %] | CH₄-Conv. [%] | CO₂-Conv. [%] | H₂/CO-ratio |
| Cat.2a_s1 | 850 | 27.5 | 27.5 | 0 | 40 | 46 | 78 | 1.5 |
| Cat.2b_s1 | 850 | 27.5 | 27.5 | - | 40 | 30 | 74 | 1,6 |
| | | | | | | | | |
| Cat.2a_s2 | 850 | 32.5 | 32.5 | 0 | 30 | 49 | 76 | 1.2 |
| Cat.2b_s2 | 850 | 32.5 | 32.5 | - | 30 | 38 | 74 | 1,2 |
| | | | | | | | | |
| Cat.2a_s3 | 950 | 32.5 | 32.5 | 0 | 30 | 66 | 78 | 1.1 |
| Cat.2b_s3 | 950 | 32.5 | 32.5 | - | 30 | 65 | 90 | 1,3 |
| | | | | | | | | |
| Cat.2a_s4 | 950 | 37.5 | 37.5 | 0 | 20 | 64 | 73 | 1.0 |
| Cat.2b_s4 | 950 | 37.5 | 37.5 | - | 20 | 68 | 90 | 1,1 |
| | | | | | | | | |
| Cat.2a_s5 | 950 | 42.5 | 42.5 | 0 | 10 | 57 | 67 | 0.8 |
| Cat.2b_s5 | 950 | 42.5 | 42.5 | - | 10 | 70 | 88 | 0,9 |
| | | | | | | | | |
| Cat.2a_s6 | 950 | 42.5 | 42.5 | 5 | 5 | 67 | 67 | 0.8 |
| Cat.2b_s6 | 950 | 42.5 | 42.5 | 5 | 5 | 74 | 85 | 0,9 |
| | | | | | | | | |
| Cat.2a_s7 | 950 | 42.5 | 42.5 | 10 | 0 | 82 | 74 | 0.9 |
| Cat.2b_s7 | 950 | 42.5 | 42.5 | 10 | - | 85 | 75 | 1,15 |
| | | | | | | | | |
| Der Eingangsgas enthält 5vol.% Argon als interner Standard | | | | | | | | |

Die an den Cat.2a und Cat.2b vorgenommen Untersuchungen wurden jeweils nach einer kumulativen Laufzeit von mehr als tausend Stunden beendet und die Proben aus dem Reaktorrohr ausgebaut. Keine der nach der Untersuchung zurückgewonnenen Proben wies Koksablagerung auf. Die Ergebnisse sind somit ein weiterer Befund, die die äußerst hohe Koksresistenz der eingesetzten Katalysatoren bei den drastischen Prozessbedingungen belegen, die in der Tabelle 4 geben sind. Gleichzeitig konnte - wie der Tabelle 4 zu entnehmen ist - bei den Katalyseexperimenten ein Produktstrom erhalten werden, der ein vorteilhaftes Verhältnis von H₂ zu CO aufwies.

## Patentansprüche

1. Verfahren zur Reformierung von Gasgemischen umfassend Kohlenwasserstoffe und CO₂, das **dadurch gekennzeichnet ist, dass**
(i) Eduktgas mit edelmetallhaltigem Katalysator in Kontakt gebracht und zu einem ersten Produktgas umgesetzt wird,
(ii) das erste Produktgas aus der ersten Verfahrensstufe in zumindest einer weiteren Verfahrensstufe mit nicht edelmetallhaltigem Katalysator in Kontakt gebracht wird und zu zumindest einem zweitem Produktgas umgesetzt wird.

2. Verfahren zur Reformierung von Gasgemisch umfassend Kohlenwasserstoffe und CO₂ gemäß Anspruch 1, das **dadurch gekennzeichnet ist, dass** dem in der ersten und/oder der zweiten Verfahrensstufe erhaltenen Produktgas weiteres Gas beigemischt wird, wobei es sich bei dem Gas für die Beimischung vorzugsweise um Eduktgas und oder Kreisgas (Recycle-Gas) handelt und der Anteil beigemischten Gases, das dem jeweiligen Produktgas zugefügt wird, im Bereich von 0,1 - 70 Vol.-% liegt, vorzugsweise im Bereich von 1 - 50 Vol.-% und weiter vorzugsweise im Bereich von 2 - 40 Vol.-%.

3. Verfahren zur Reformierung von Gasgemisch umfassend Kohlenwasserstoffe und CO₂ gemäß Anspruch 1 oder Anspruch 2, das **dadurch gekennzeichnet ist, dass** das zur ersten Verfahrensstufe eingesetzte Eduktgas ein Verhältnis von Wasserdampf zu Kohlenstoffatomen (d.h. ein n_{H2O}/n_{c.a.n.}-Verhältnis) von < 1 ist, vorzugsweise < 0,5, weiter vorzugsweise < 0,2, besonders vorzugsweise < 0,1, weiter besonders vorzugsweise < 0,05, und insbesondere bevorzugt < 0,02..

4. Verfahren zur Reformierung von Gasgemisch umfassend Kohlenwasserstoffe und CO₂ gemäß einem der Ansprüche 1 - 3, das **dadurch gekennzeichnet ist, dass** der Gesamtgehalt an Wasserdampf im Eduktgas < 50 Vol.-% ist, vorzugsweise < 25 Vol.-%, noch weiter vorzugsweise < 15 Vol.-%, insbesondere kleiner 10 Vol.-%, abermals bevorzugt < 5 Vol.-%, darüber hinaus bevorzugt < 3 Vol.-% und insbesondere bevorzugt < 1 Vol.-%; ganz besonders bevorzugt ist eine Ausführungsform, in der das Eduktgas vollständig wasserfrei ist (d.h. der Wasserdampfgehalt < 0,005 Vol.-%).

5. Verfahren zur Reformierung von Gasgemisch umfassend Kohlenwasserstoffe und CO₂ gemäß einem der Ansprüche 1 - 4, das **dadurch gekennzeichnet ist, dass** das Eduktgas Wasserstoff enthält, wobei der Wasserstoffgehalt bis zu 30 Vol.-% beträgt, vorzugsweise ist der Wasserstoffgehalt < 20 Vol.-%, weiter vorzugsweise < 10 Vol.-%, weiter bevorzugt < 5 Vol.-%, noch weiter bevorzugt < 3 Vol.-% und insbesondere bevorzugt < 1 Vol.-%.

6. Verfahren zur Reformierung von Gasgemisch umfassend Kohlenwasserstoffe und CO₂ gemäß einem der Ansprüche 1 - 5, das **dadurch gekennzeichnet ist, dass** der Kohlenwasserstoffumsatz, der in der ersten Verfahrensstufe erzielt wird, im Bereich von 1 - 80 % liegt, vorzugsweise im Bereich von 2 - 60 %, noch weiter vorzugsweise im Bereich von 3 - 50 %, besonders bevorzugt im Bereich von 4 - 45 %, ganz besonders bevorzugt im Bereich von 5 - 40 % und darüber hinaus noch weiter bevorzugt im Bereich von 10 - 35 %.

7. Verfahren zur Reformierung von Gasgemisch umfassend Kohlenwasserstoffe und CO₂ gemäß einem der Ansprüche 1 -6, das **dadurch gekennzeichnet ist, dass** das erste Produktgas (d.h. Produktgas 1) einen Gesamtgehalt an Wasserstoff und Wasserdampf im Bereich von 3 - 60 Vol.-% aufweist, vorzugsweise im Bereich von 5 - 50 Vol.-%, weiter vorzugsweise im Bereich von 7 - 30 Vol.-%, insbesondere vorzugsweise im Bereich von 8 - 25 Vol.-% und noch weiter vorzugsweise im Bereich von 9 - 23 Vol.-%.

8. Verfahren zur Reformierung von Gasgemisch umfassend Kohlenwasserstoffe und CO₂ gemäß einem der Ansprüche 1 - 78, das **dadurch gekennzeichnet ist, dass** das der Prozessdruck des Verfahrens im Bereich von 1 - 200 bar, vorzugsweise von 5 - 100 bar, weiter vorzugsweise von 10 bis 60 bar, insbesondere vorzugsweise im Bereich von 20 - 40 bar liegt und/oder die Prozesstemperatur des Verfahren im Bereich von 500 - 1100 °C, vorzugsweise von 750 - 1050 °C, noch weiter vorzugweise im Bereich von 800 - 1000 °C und insbesondere vorzugsweise von 850 - 950 °C liegt.

9. Verfahren zur Reformierung von Gasgemisch umfassend Kohlenwasserstoffe und CO₂ gemäß einem der Ansprüche 1 -8, das **dadurch gekennzeichnet ist, dass** es sich bei dem Kohlenwasserstoff um Methan handelt und das Verhältnis von Methan zu Kohlendioxid im Bereich von 4 zu 1 bis 1 zu 4 liegt, besonders bevorzugt im Bereich von 3 zu 1 bis 1 zu 3 und ganz besonders bevorzugt im Bereich von 2 zu 1 bis 1 zu 2, wobei das am meisten bevorzugte Verhältnis von Methan zu Kohledioxid nahe bei 1 zu 1 liegt; falls es sich beim Kohlenwasserstoff um Ethan handelt, so liegen Kohlendioxid und Ethan vorzugsweise in einem molaren Verhältnis von 2 zu 1 vor.

10. Verfahren zur Reformierung von Gasgemisch umfassend Kohlenwasserstoffe und CO₂ gemäß einem der Ansprüche 1 - 9, das **dadurch gekennzeichnet** ist, der in der ersten Verfahrensstufe eingesetzte Katalysatorvolumen bezogen auf das Gesamtvolumen an Katalysator einen Volumenanteil im Bereich von 5 - 60 Vol.-% aufweist, weiter bevorzugt einen Volumenanteil im Bereich von 10 - 45Vol..-% und noch weiter bevorzugt einen Volumenanteil im Bereich von 10 - 30 Vol.-%; der Volumenanteil des in der zweiten und weiteren Verfahrensstufen eingesetzten Katalysators liegt vorzugsweise im Bereich von 40 - 95 Vol.-%, weiter vorzugsweise im Bereich von 55 - 90 Vol.-% und noch weiter vorzugsweise im Bereich 70 - 90 Vol.-%.

11. Verfahren zur Reformierung von Gasgemisch umfassend Kohlenwasserstoffe und CO₂ gemäß einem der Ansprüche 1 - 10, das **dadurch gekennzeichnet ist, dass** das der edelmetallhaltiger Katalysator zumindest eine Edelmetallkomponente aus der Gruppe Pt, Rh, Ru, Ir, Pd und/oder Au umfasst.

12. Verfahren zur Reformierung von Gasgemisch umfassend Kohlenwasserstoffe und CO₂ gemäß einem der Ansprüche 1 - 11, das **dadurch gekennzeichnet ist, dass** das der edelmetallhaltige Katalysator als Edelmetallkomponente zumindest Iridium umfasst, vorzugsweise ist der Gehalt an iridiumhaltiger Edelmetallkomponete ≤ 3 Gew.-%, weiter vorzugsweise ≤ 2 Gew.-%, noch weiter vorzugsweise ≤ 1 Gew.-% und insbesondere vorzugsweise ≤ 0,5 Gew.-%, die iridiumhaltige Edelmetallkomponente auf zirconiumdioxidhaltigem Träger vorliegt, das vorzugsweise kubische und/oder tetragonale Phase aufweist, wobei der Anteil an kubische und/oder tetragonaler Phase vorzugsweise > 50 Gew.-%, weiter vorzugsweise > 70 Gew.-% und insbesondere vorzugsweise > 90 Gew.-% beträgt, und/oder die iridiumhaltige Katalysator der ersten Verfahrensstufe als Stabilisator ein oder mehrere Elemente aus der Guppe der Seltenen Erden, vorzugsweise Sc, Y, La, Ce, Pr, Nd, Sm, Eu, Gd, Tb, Dy, Ho, Er, Tm, Yb, Lu) umfasst, wobei der Anteil an Stabilisator vorzugsweise 1 - 30 Gew.-% beträgt.

13. Verfahren zur Reformierung von Gasgemisch umfassend Kohlenwasserstoffe und CO₂ gemäß einem der Ansprüche 1 - 12, das **dadurch gekennzeichnet ist, dass** der nicht edelmetallhaltige Katalysator der zweiten Verfahrensstufe zumindest ein Material aus der Gruppe Nickelspinell, Kobalthexaaluminat und/oder Nickelhexaluminat umfasst.

14. Verfahren zur Reformierung von Gasgemisch umfassend Kohlenwasserstoffe und CO₂ gemäß einem der Ansprüche 1 - 13, das **dadurch gekennzeichnet ist, dass** mittels des erfindungsgemäßen Verfahrens ein Synthesegas hergestellt wird, dass einen Wasserstoff-zu-Kohlenmonoxid-Verhältnis im Bereich von 0,5 - 2 aufweist, vorzugsweise ≤ 1,5 und insbesondere vorzugweise ≤ 1,2.

15. Verfahren zur Reformierung von Gasgemisch umfassend Kohlenwasserstoffe und CO₂ gemäß einem der Ansprüche 1 - 14, das **dadurch gekennzeichnet ist, dass** das hergestellte Synthesegas in einer oder mehreren nachgeschalteten Verfahrensstufen zu Herstellung von zumindest einem der nachfolgend genannten Produkte Methanol, DME, Essigsäure, höheren Alkoholen sowie auch für die Fischer-Tropsch Synthese von langkettigen Kohlenwasserstoffen und Olefinen eingesetzt wird.
